# EUROPEAN PATENT APPLICATION

(11) **EP 4 787 201 A1**
(43) Date of publication of application: **05.08.2026**
(21) Application number: 25216291.2
(22) Date of filing: 17.11.2025
(51) Int. Cl.: G06F 21/30, G06F 21/32, G06F 21/44

(54) **MEASUREMENT SYSTEM, TERMINAL DEVICE, PROGRAM, AND MEASUREMENT METHOD**

(30) Priority: 29.01.2025 JP 2025013410
(71) Applicant: Yokogawa Test & Measurement Corporation, Hachioji-shi, Tokyo 192-8566 (JP)
(72) Inventor: KAKEHASHI, Taro, Hachioji-shi, Tokyo, 192-8566 (JP)
(74) Representative: Stöckeler, Ferdinand

(57) **Abstract**

A measurement system (1) according to the present disclosure includes a measurement device (10) and a terminal device (20). The terminal device (20) includes an authentication unit (24) that authenticates a user, and a processor (22). The processor (22) automatically acquires device information of the measurement device (10) when the terminal device (20) is connected in a wired manner to the measurement device (10) via a cable, automatically launches a control application corresponding to the device information, and lifts usage restrictions on the measurement device (10) when the authentication unit (24) authenticates the user.

## Description

### CROSS-REFERENCE TO RELATED APPLICATION

The present application claims priority to Japanese Patent Application 2025-013410 filed on January 29, 2025, the entire contents of which are incorporated herein by reference.

### TECHNICAL FIELD

The present disclosure relates to a measurement system, a terminal device, a program, and a measurement method.

### BACKGROUND

Wireless communication has been performed between a terminal device such as a smartphone and a measurement device, allowing the terminal device to control the measurement device and allowing data to be exchanged between the terminal device and the measurement device. For example, Patent Literature (PTL) 1 discloses a technique for wirelessly connecting a mobile phone to an optical time domain reflectometer (OTDR) and controlling the OTDR with the mobile phone.

Measurement devices also have mechanisms for restricting the use of specific operations and functions. Usually, such usage restrictions are lifted by password authentication or by using a Universal Serial Bus (USB) dongle. By placing usage restrictions on the measurement device, operational errors and inappropriate use can be prevented.

### CITATION LIST

### Patent Literature

PTL 1: JP 2011-176530 A

### SUMMARY

When connecting a terminal device and a measurement device via wireless communication, it is necessary to configure the network on each of the terminal device and the measurement device, making it cumbersome to establish wireless communication. Furthermore, when the measurement device is used in an area where wireless communication is prohibited, wireless communication between the terminal device and the measurement device is not possible.

If password authentication is used to lift usage restrictions on a measurement device, it is necessary to enter a long password into the measurement device, which is time-consuming. Also, in a case in which a measurement device is used by a plurality of users, and all of the users use the same password, it becomes unclear who is responsible. Additionally, using a USB dongle to lift the usage restrictions on the measurement device runs the risk of the dongle being lost, and the risk of unauthorized access if the dongle is stolen.

It would be helpful to provide a measurement system, a terminal device, a program, and a measurement method that are capable of removing usage restrictions on a measurement device through a simple process when the measurement device is controlled by a terminal device.
[1] A measurement system comprising a measurement device and a terminal device,
   wherein the terminal device comprises
      an authentication unit configured to authenticate a user, and a processor,
   wherein the processor is configured to
      automatically acquire device information of the measurement device when the terminal device is connected in a wired manner to the measurement device via a cable,
      automatically launch a control application corresponding to the device information, and
      lift usage restrictions on the measurement device when the authentication unit authenticates the user.

According to such a measurement system, when the measurement device is controlled by the terminal device, it is possible to lift the usage restrictions on the measurement device through a simple process.

[2] In the measurement system according to [1], the authentication unit may be configured to authenticate the user by multi-factor authentication or biometric authentication.

This configuration allows the user to be authenticated using an authentication function that is normally provided in the terminal device, such as multi-factor authentication or biometric authentication.

[3] The measurement system according to [1] or [2],
wherein the terminal device may further comprise a memory configured to store a configuration file for configuring the measurement device, and
wherein the processor may be configured to transmit the configuration file to the measurement device to configure the measurement device.

This configuration allows the measurement device to be set easily to a desired state.

[4] The measurement system according to any one of [1] to [3],
wherein the terminal device may further comprise a memory configured to store a list associating the device information with the control application, and
wherein the processor may be configured to refer to the list and automatically launch the control application corresponding to the device information.

This configuration makes it possible to start the corresponding control application automatically based on the list stored in advance.

[5] In the measurement system according to any one of [1] to [4], the device information may include a vendor ID and a product ID.

This configuration makes it possible to determine the type of measurement device based on the vendor ID and the product ID.

[6] In the measurement system according to any one of [1] to [5], connection in the wired manner may be a USB connection.

This configuration makes it possible to utilize the USB plug-and-play function.

[7] In the measurement system according to any one of [1] to [6], the measurement device may be an optical pulse tester.

This configuration makes it possible to lift usage restrictions on the optical pulse tester easily.

[8] A terminal device capable of connecting to a measurement device via a wired connection, the terminal device comprising:
an authentication unit configured to authenticate a user, and
a processor,
wherein the processor is configured to
   automatically acquire device information of the measurement device when the terminal device is connected in a wired manner to the measurement device via a cable,
   automatically launch a control application corresponding to the device information, and
   lift usage restrictions on the measurement device when the authentication unit authenticates the user.

According to such a terminal device, when the measurement device is controlled by the terminal device, it is possible to lift the usage restrictions on the measurement device through a simple process.

[9] A program in a measurement system comprising a measurement device and a terminal device, the program being configured to cause the terminal device to execute operations comprising:
automatically acquiring device information of the measurement device when the terminal device is connected in a wired manner to the measurement device via a cable;
automatically launching a control application corresponding to the device information; and
lifting usage restrictions on the measurement device when the terminal device authenticates a user.

According to such a program, when the measurement device is controlled by the terminal device, it is possible to lift the usage restrictions on the measurement device through a simple process.

[10] A measurement method in a measurement system comprising a measurement device and a terminal device, the measurement method comprising:
automatically acquiring device information of the measurement device when the terminal device is connected in a wired manner to the measurement device via a cable;
automatically launching a control application corresponding to the device information; and
lifting usage restrictions on the measurement device when the terminal device authenticates a user.

According to such a measurement method, when the measurement device is controlled by the terminal device, it is possible to lift the usage restrictions on the measurement device through a simple process.

According to the present disclosure, it is possible to provide a measurement system, a terminal device, a program, and a measurement method that are capable of removing usage restrictions on a measurement device through a simple process when the measurement device is controlled by a terminal device.

### BRIEF DESCRIPTION OF THE DRAWINGS

In the accompanying drawings:
FIG. 1 is a diagram illustrating a schematic configuration of a measurement system according to an embodiment of the present disclosure; and
FIG. 2 is a flowchart illustrating an example of the operation of the measurement system according to an embodiment.

### DETAILED DESCRIPTION

An embodiment of the present disclosure will be described below, with reference to the drawings.

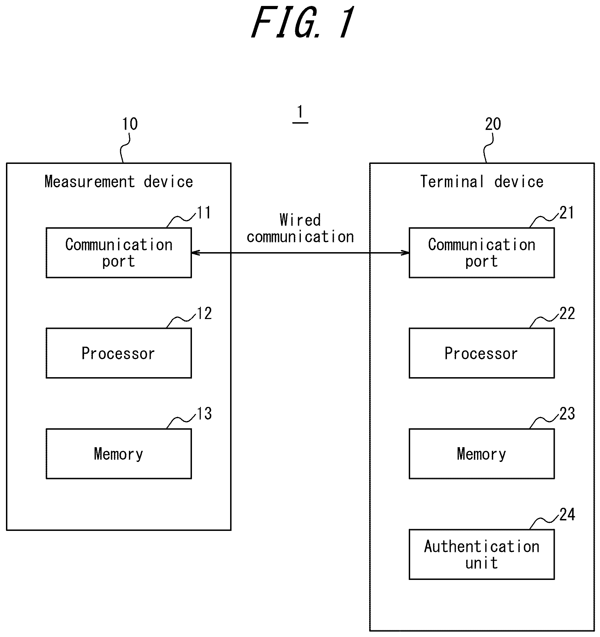

FIG. 1 is a diagram illustrating a schematic configuration of a measurement system 1 according to an embodiment of the present disclosure. The measurement system 1 includes a measurement device 10 and a terminal device 20.

The measurement device 10 and the terminal device 20 are capable of performing wired communication by being connected in a wired manner via a cable. The type of wired connection is not limited to this and may, for example, be a USB connection, an RS-232C connection, or the like.

The measurement device 10 can impose usage restrictions on specific operations and specific functions. When the usage restrictions on the measurement device 10 are lifted, the user becomes able to perform specific operations on the measurement device 10 and use specific functions of the measurement device 10.

The measurement device 10 may be any device that is capable of wired communication with the terminal device 20 and that can impose usage restrictions on specific operations and specific functions. The measurement device 10 may, for example, be an optical time domain reflectometer (OTDR), but this example is not limiting.

An optical pulse tester is a device for evaluating the length of an optical fiber, the loss and reflection at optical fiber connection points, and the like. An optical pulse tester is a device that injects an optical pulse into an optical fiber, measures the power of backscattered light, light returning to the input end due to Fresnel reflection, and the like in the time domain, and then displays and analyzes the results. In recent years, optical pulse testers have been required to have user-friendly interfaces, and integration with smartphones and the like is becoming more common.

The measurement device 10 includes a communication port 11, a processor 12, and a memory 13.

The communication port 11 is a port to which a cable is connected when the measurement device 10 performs wired communication with the terminal device 20.

The processor 12 is a general-purpose processor such as a Central Processing Unit (CPU) or a Graphics Processing Unit (GPU), or a dedicated processor that is dedicated to specific processing. The processor 12 may be a Field-Programmable Gate Array (FPGA) or an Application Specific Integrated Circuit (ASIC), for example. The processor 12 may be a combination of a plurality of processors. The processor 12 executes processes related to the operation of the measurement device 10 while controlling each component of the measurement device 10.

The memory 13 is, for example, a semiconductor memory, a magnetic memory, an optical memory, or the like, but is not limited to these. The memory 13 may function as, for example, a main memory device, an auxiliary memory device, or a cache memory. The memory 13 stores any information used in the operation of the measurement device 10. For example, the memory 13 may store system programs, application programs, various types of information, and the like. A portion of the memory 13 may be provided outside the measurement device 10. In this case, a portion of the externally installed memory 13 may be connected to the measurement device 10 via any appropriate interface.

The terminal device 20 may be any device capable of wired communication with the measurement device 10. The terminal device 20 is, for example, a general-purpose electronic device such as a smartphone, a tablet terminal, or a PC (Personal Computer), or a dedicated electronic device.

The terminal device 20 includes a communication port 21, a processor 22, a memory 23, and an authentication unit 24.

The communication port 21 is a port to which a cable is connected when the terminal device 20 communicates with the measurement device 10 in a wired manner.

The processor 22 is a general-purpose processor such as a CPU or a GPU or a dedicated processor that is dedicated to specific processing. The processor 22 may be an FPGA or an ASIC, for example. The processor 22 may be a combination of a plurality of processors. The processor 22 executes processes related to the operation of the terminal device 20 while controlling each component of the terminal device 20.

The memory 23 is, for example, a semiconductor memory, a magnetic memory, an optical memory, or the like, but is not limited to these. The memory 23 may function as, for example, a main memory device, an auxiliary memory device, or a cache memory. The memory 23 stores any information used in the operation of the terminal device 20. For example, the memory 23 may store system programs, application programs, various types of information, and the like. A portion of the memory 23 may be provided outside the terminal device 20. In this case, a portion of the externally installed memory 23 may be connected to the terminal device 20 via any appropriate interface.

The authentication unit 24 authenticates the user of the terminal device 20. The authentication unit 24 may authenticate the user by, for example, multi-factor authentication or biometric authentication, but these examples are not limiting. The biometric authentication may, for example, be fingerprint authentication, facial authentication, or the like. In the case of performing fingerprint authentication, the authentication unit 24 may be provided with a fingerprint sensor. In the case of performing facial authentication, the authentication unit 24 may be provided with a camera for photographing the user's face.

### (Measurement system operation)

Next, the operation of the measurement system 1 will be described. In the following description, the case in which the measurement device 10 and the terminal device 20 are connected via USB will be described as an example.

To control the measurement device 10 by the terminal device 20, the user connects the communication port 11 of the measurement device 10 and the communication port 21 of the terminal device 20 with a cable.

When the communication port 21 of the terminal device 20 and the communication port 11 of the measurement device 10 are connected in a wired manner by the cable, the processor 22 of the terminal device 20 automatically acquires the device information of the measurement device 10 via the communication port 21. Such automatic acquisition of device information is possible, for example, by the USB plug-and-play function.

The device information may include a vendor ID and a product ID. The vendor ID is an ID for identifying the company that manufactured the measurement device 10. The product ID is an ID for identifying the type of measurement device 10.

The memory 23 of the terminal device 20 stores a list that associates the device information with control applications. The control application is an application for controlling the measurement device 10 corresponding to the device information. The user can control the measurement device 10 that is communicating in a wired manner with the terminal device 20 by operating the control application on the terminal device 20.

When the processor 22 acquires device information from the measurement device 10 that has started communicating in a wired manner by connecting a cable, the processor 22 refers to the list stored in the memory 23 and automatically launches the control application corresponding to the acquired device information. In a case in which there is no control application corresponding to the obtained device information in the list stored in the memory 23, the processor 22 does not launch the control application.

The authentication unit 24 of the terminal device 20 executes an authentication process for authenticating a user. The authentication unit 24 may authenticate the user by, for example, multi-factor authentication or biometric authentication.

When the authentication unit 24 authenticates the user, the processor 22 lifts the usage restrictions on the measurement device 10. This allows the user to use the automatically launched control application to control the measurement device 10 with the usage restrictions lifted.

At this time, the processor 22 transmits information indicating that the user has been authenticated to the measurement device 10 via the communication port 21. When the processor 12 of the measurement device 10 acquires information from the terminal device 20 indicating that the user has been authenticated, the processor 12 lifts the usage restrictions on the measurement device 10.

In this way, by lifting the usage restrictions on the measurement device 10 through an authentication process by the authentication unit 24 of the terminal device 20, rather than by entering a password into the measurement device 10 or inserting a USB dongle into the measurement device 10, the user can lift the usage restrictions on the measurement device 10 through a simple procedure.

The memory 23 of the terminal device 20 may store a configuration file for configuring the measurement device 10. The configuration file is a file that contains information for configuring the measurement device 10 to a desired state. The configuration file may be created by the measurement device 10 or may be created on the control application running on the terminal device 20.

In the case of configuring the measurement device 10 to a desired state, the processor 22 transmits the configuration file to the measurement device 10 via the communication port 21. When the processor 12 of the measurement device 10 acquires the configuration file from the terminal device 20, the processor 12 configures the measurement device 10 to the desired state.

In this way, the terminal device 20 can easily set the measurement device 10 to the desired state by transmitting the configuration file to the measurement device 10. For example, in the case of a plurality of measurement devices 10, the terminal device 20 can easily set the plurality of measurement devices 10 to a common state by connecting to the plurality of measurement devices 10 in sequence in a wired manner and transmitting the configuration file.

For example, a conventional method is to store a configuration file in a USB memory or the like and have a plurality of measurement devices read the configuration file. In this case, however, it is necessary to insert the USB memory into the plurality of measurement devices, which is inefficient. Furthermore, in this case, since it is necessary to place the configuration file in a specific folder in the measurement device and to input specific commands, there is a risk of operational errors occurring. In contrast, in the measurement system 1 according to the present embodiment, a plurality of measurement devices 10 can be easily set to a common state simply by connecting to the plurality of measurement devices 10 in sequence in a wired manner and transmitting the configuration file.

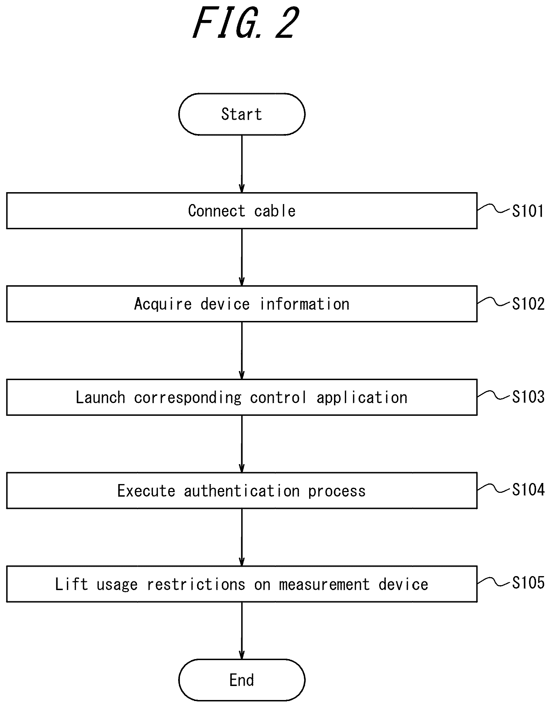

The operation of the measurement system 1 will be described with reference to the flowchart in FIG. 2.

Step S101: The user connects the communication port 11 of the measurement device 10 and the communication port 21 of the terminal device 20 with a cable.

Step S102: When the communication port 21 of the terminal device 20 and the communication port 11 of the measurement device 10 are connected in a wired manner by the cable, the processor 22 of the terminal device 20 automatically acquires the device information of the measurement device 10 via the communication port 21.

Step S103: When the processor 22 acquires the device information from the measurement device 10, the processor 22 refers to the list stored in the memory 23 and automatically launches a control application corresponding to the acquired device information.

Step S104: The authentication unit 24 of the terminal device 20 executes an authentication process to authenticate the user.

Step S105: When the authentication unit 24 authenticates the user, the processor 22 lifts the usage restrictions on the measurement device 10.

According to the measurement system 1 of an embodiment as described above, it is possible to lift the usage restrictions on the measurement device 10 through a simple process in the case of the terminal device 20 controlling the measurement device 10. More specifically, in the measurement system 1, the terminal device 20 includes the authentication unit 24 that authenticates the user, and the processor 22. The processor 22 automatically acquires device information of the measurement device 10 when the terminal device 20 is connected in a wired manner to the measurement device 10 via a cable, automatically launches a control application corresponding to the device information, and lifts usage restrictions on the measurement device 10 when the authentication unit 24 authenticates the user. In this way, when the terminal device 20 is connected in a wired manner to the measurement device 10 via a cable, the terminal device 20 automatically launches a control application corresponding to the device information of the measurement device 10, so there is no need for cumbersome configuration such as wireless communication, and the measurement device 10 can be controlled by a simple process. In addition, since the authentication unit 24 of the terminal device 20 lifts the usage restrictions on the measurement device 10 by authenticating the user, the usage restrictions on the measurement device 10 can be lifted by a simple process. Therefore, according to the measurement system 1 of an embodiment, it is possible to lift the usage restrictions on the measurement device 10 through a simple process in the case of the terminal device 20 controlling the measurement device 10.

For example, as a comparative example, in the case of a measurement device and a terminal device being wirelessly connected, it is necessary to configure wireless communication in each of the measurement device and the terminal device, which is cumbersome. Also, in the case of using a different measurement device or a different terminal device, it is necessary to configure wireless communication each time, which requires cumbersome processing. Furthermore, when the measurement device is used in an area where wireless communication is prohibited, wireless connection between the measurement device and the terminal device is not possible.

In contrast, in one embodiment of the measurement system 1, the measurement device 10 and the terminal device 20 are connected via a wired connection, so there is no need for cumbersome processing such as configuring wireless communication, and wired communication can be easily achieved between the measurement device 10 and the terminal device 20. Furthermore, the measurement system 1 according to an embodiment can perform wired communication even in areas where wireless communication is prohibited.

For example, as another comparative example, in the case of authenticating a user on a measurement device, it is necessary to input a long password into the measurement device, which is troublesome. Also, in a case in which a measurement device is used by a plurality of users, and all of the users use the same password, it becomes unclear who is responsible. Additionally, using a USB dongle to lift the usage restrictions on the measurement device runs the risk of the dongle being lost, and the risk of unauthorized access if the dongle is stolen.

In contrast, in one embodiment of the measurement system 1, the authentication unit 24 of the terminal device 20 lifts the usage restrictions on the measurement device 10 by authenticating the user, so that the usage restrictions on the measurement device 10 can be easily lifted using normal user authentication of the terminal device 20.

It will be apparent to those skilled in the art that the present disclosure may be realized in certain forms other than the above-described embodiments without departing from the spirit or essential characteristics of the present disclosure. Accordingly, the foregoing description is merely illustrative and is not limiting. The scope of the disclosure is defined by the appended claims, not by the foregoing description. Among all modifications, those within a range of equivalents to the present disclosure shall be considered as being included in the present disclosure.

For example, the arrangement and number of each of the above-mentioned components are not limited to those illustrated in the above description and the drawings. The arrangement and number of each component may be configured freely as long as the corresponding function can be realized.

## Claims

1. A measurement system comprising a measurement device and a terminal device,
wherein the terminal device comprises
an authentication unit configured to authenticate a user, and
a processor,
wherein the processor is configured to
automatically acquire device information of the measurement device when the terminal device is connected in a wired manner to the measurement device via a cable,
automatically launch a control application corresponding to the device information, and
lift usage restrictions on the measurement device when the authentication unit authenticates the user.

2. The measurement system according to claim 1, wherein the authentication unit is configured to authenticate the user by multi-factor authentication or biometric authentication.

3. The measurement system according to claim 1,
wherein the terminal device further comprises a memory configured to store a configuration file for configuring the measurement device, and
wherein the processor is configured to transmit the configuration file to the measurement device to configure the measurement device.

4. The measurement system according to claim 1,
wherein the terminal device further comprises a memory configured to store a list associating the device information with the control application, and
wherein the processor is configured to refer to the list and automatically launch the control application corresponding to the device information.

5. The measurement system according to claim 1, wherein the device information includes a vendor ID and a product ID.

6. The measurement system according to claim 1, wherein connection in the wired manner is a USB connection.

7. The measurement system according to claim 1, wherein the measurement device is an optical pulse tester.

8. A terminal device capable of connecting to a measurement device via a wired connection, the terminal device comprising:
an authentication unit configured to authenticate a user, and
a processor,
wherein the processor is configured to
automatically acquire device information of the measurement device when the terminal device is connected in a wired manner to the measurement device via a cable,
automatically launch a control application corresponding to the device information, and
lift usage restrictions on the measurement device when the authentication unit authenticates the user.

9. A program in a measurement system comprising a measurement device and a terminal device, the program being configured to cause the terminal device to execute operations comprising:
automatically acquiring device information of the measurement device when the terminal device is connected in a wired manner to the measurement device via a cable;
automatically launching a control application corresponding to the device information; and
lifting usage restrictions on the measurement device when the terminal device authenticates a user.

10. A measurement method in a measurement system comprising a measurement device and a terminal device, the measurement method comprising:
automatically acquiring device information of the measurement device when the terminal device is connected in a wired manner to the measurement device via a cable;
automatically launching a control application corresponding to the device information; and
lifting usage restrictions on the measurement device when the terminal device authenticates a user.
